# EUROPEAN PATENT APPLICATION

(11) **EP 1 956 841 A2**
(43) Date of publication of application: **13.08.2008**
(21) Application number: 07116338.0
(22) Date of filing: 13.09.2007
(51) Int. Cl.: H04N 7/16

(54) **Preferable program allocation**

(30) Priority: 09.02.2007 TR 200700761
(71) Applicant: Vestel Elektronik Sanayi ve Ticaret A.S., 45030 Manisa (TR)
(72) Inventor: Boran, Baris, 45030, MANISA (TR); Sever, Enis, 45030, MANISA (TR)
(74) Representative: Cayli, Hülya

(57) **Abstract**

This invention relates to a preferable broadcast channels allocation method in for television and radio receivers, for variable user preferences in different world regions. The goal is to establish a preferable program allocation list by giving the user region and/or language and content preference selection options and to make that particular list adjustable to channel content variations. To achieve this goal, the invention contains a region and/or language based priority list of broadcast channels in a pre-established order; whereby the priority order means the memorization order of the broadcast channels to program numbers and is determined in the site of manufacturer of the receiver. After making selections in region and/or language based priority lists, the user performs a second choice by means of defining user content preferences. After defining region and/or language and content preference priority selections; system gives the user the optimum channel selection list depending on region and/or language and content preference selections.

## Description

### Technical Field

This invention relates to a preferable broadcast channels allocation method for television and radio receivers, for variable user preferences in different world regions.

### Prior Art

Technically, broadcasting signals may include codes for identifying broadcast stations, channel contents, ratings etc., within their vertical blank interval (VBI, an informative extension stage attached to broadcast signal where teletext and other additional data are also carried). There are various applications in different countries. In England (UK), where channel contents are evaluated by means of codes present in broadcast channels, inappropriate channels for example horror concepts for teenagers, are blocked by receiver as the channel contents are evaluated and found unsuitable for initial users. Systems like parental control are also provided by those systems.

In the published patent application, US2002073421, a profile-recognition based personal television system is disclosed. In this system, profiles can be created, and non-volatile memories for user information storage can be used. By means of that profile creation, the system edits user's channel selections. In this prior of art document, users may select pre-defined profiles. The disclosed system, in US2002073421, may be used for parental control and preference selections; but once the tables referring to selected profiles are established, the content of the program at a selected and listed channel may change. Therefore, those systems are not suitable for unstable-contented channels.

Also, the patent EP0486988 may be regarded as another prior of art for channel auto-searching and listing system where it searches for broadcast signals, identifies the broadcast station on the basis of a code present in the channel signal, looking for the corresponding program number of the identified broadcast channel in pre-established table, memorizing the tuning information of the identified broadcast channel in the non-volatile memory under the corresponding number and performs a list via memorizing the broadcast channels in a the non-volatile memory under the corresponding channel number where corresponding channel numbers can be re-determined by user. The system in EP0486988B2 looks for corresponding program number in pre-established table and writes the tuning data and the identified broadcasting channel in the non-volatile memory only under the corresponding number. If one of the channels can not be found during search; the corresponding channel can not be assigned to a program number.

Accordingly, it is an object of the present invention to provide preferable program allocation by means of eliminating disadvantages of listed prior arts. The aim of the present invention is to establish a preferable program allocation list by giving the user region and/or language and content preference selection options and to make that particular list adjustable to channel content variations. To achieve this goal, the invention contains a region and/or language based priority list of broadcast channels in a pre-established order; whereby the priority order means the memorization order of the broadcast channels to program numbers and is determined in the site of manufacturer of the receiver. After making selections in region and/or language based priority lists, the user performs another choice by means of defining his/her content preferences. After language priority and content preference selections; system gives the user the optimum channel selection list depending on language, region and content preference selections.

### Object of the Invention

The aim of the present invention is to establish a preferable broadcast channel allocation list by giving the user region and/or language and content preference selection options and to make that particular list adjustable to channel content variations.

### Description of the Figures

Figure 1: An example of initial priority selection menu
Figure 2: An example for language priority selection menu
Figure 3: An example for content preference definition on TV screen
Figure 4: An example of a region and/or language based pre-established priority list

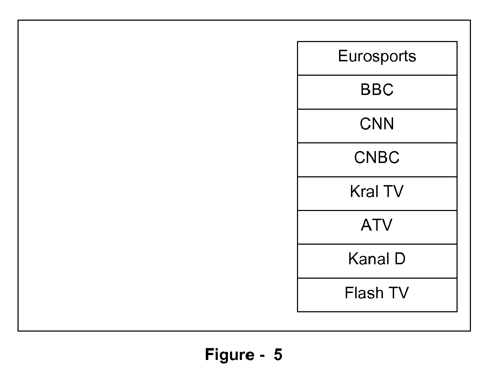

Figure 5: The established channel list, depending on user region and content priority selections.

### Description of Invention

A method, of establishment of preferable broadcast channel allocation list in a television or radio receiver, comprises the following steps.

Step 1: User indicates his/her initial priority selection between region and/or language selection and content preference selection options.

Step 2: In order to indicate region and/or language priority selection, user selects the region and/or language based pre-established priority order list, in the receiver, from a plurality of region and/or language based pre-established orders for different countries or language selections where those priority order lists are created in the site of receiver manufacturer. In other words, region and/or language preference having a pre-established list for broadcast channels is selected.

Step 3: In order to indicate his/her content preference, user selects another priority, based on content preference selections, at that step for priority listing of broadcast channels depending on content preferences. (Users are capable of defining content preference such like news, music, film or football basketball etc.) More than one content preference selection can be done; the available content preference options are created in the site of manufacturer.

Step 4: After selection of the region and/or language, and content preference, channel searching begins. If no region, language or content preference has been selected by the user, the default region and the default content preferences which are pre-selected by the manufacturer is selected. Also the user may reject to have automatic program search (APS) and the procedure can be interrupted in step 8 and jump to step 14; and the program numbers of the broadcasting channels in the established table will be in the order which has been found in the channel frequency search.

Step 5: All broadcasting channels search continues.

Step 6: When a channel has been found; the broadcast station, on the basis of a code present in the channel signal, is identified, if possible.

Step 7: The tuning information of the broadcasting channel is stored in the first memory of the receiver, in the order being found in the channel frequency search.

Step 8: After storing of a broadcasting station, it is jumped to step 5 and the searching and storing procedure continue until the frequency search is completed.

Step 9: When the channel frequency search is completed, sorting procedure begins.

Step 10: The broadcasting stations in the region and/or language based pre-established priority list (which have been pre-set by the manufacturer) are checked in the order, to determine whether they have been found in the frequency search, or not. (That pre-established priority list contains information about the language of channels, and that list is used in region and/or language selections.)

Step 11: If the broadcasting station in the region and/or language based pre-established priority list is found in the list stored in the first memory, the tuning information of the identified broadcast channel is stored in the first memory to an established list under the next memory space corresponding to program number, in such a way that whenever a correspondence is detected the tuning information and the broadcasting station is stored.

Step 12: It is gone to step 11 until all of the available broadcasting stations are stored in the first memory to the established list under the next memory space corresponding to program number. Consequently the channels will be listed in such a way that there will be no blank space in the list.

Step 13: It is checked whether there are broadcast signals that are not described in region and/or language based pre-established priority list or not; if there are, they are stored in the first memory to the established list under the next memory space corresponding to program number by using a second priority algorithm. The second priority algorithm is, if the broadcast signal has an identification code it has a priority and if the broadcast signal is in "C" band it has another priority against a broadcast signal in "S" band.

Channels which do not contain an informative code within their channel signals (unidentified broadcast channels) and do not have initial priorities, are listed to said initial priority based list in accordance to an additional priority due to their frequency location where the first channel closest to beginning of frequency search spectrum gains an additional priority compared to other channels

Step 14: After the storing of all of the broadcasting signals which are found, the established table in the first memory is processed according to user-defined preferences.

Step 15: The channels in the established table in the first memory are finally stored to a second memory due to user-defined preferences, in such a way that, the preferred channels have higher priority compared to others.

Step 16: That preference listing is created in such a way that; the content of viewed channel may instantly change which may not match with user's preferences. Due to changes in channel contents in established list in the second memory, the user may want to re-allocate channels due to his/her preferences; at that stage the user reset preference based channel-list in such a way that;
- the list held in the second memory will be stored to the first memory;
- during that storing process the channel list will be refreshed due to initial region and/or language based priority list and will be stored to the first memory.
- the established table in the first memory will be stored to the second memory depending on user preferences; at that step the data including list for stable-contented channel will be compared with identified channels for possible matches; if any match is encountered, although the found channel does not contain a content information, the invention will be able to identify the content of the channel in accordance to its identified name/label.

Step 17: The allocation method ends.

The additional features of the method are as follows.
- The memorization of tuning information and/or the broadcasting station information of the found broadcast channel can be done in a different method as; if there is no region and/or language based pre-established priority list in the receiver (used in above steps 10 and 11), the memorization order is only with respect to priority selection. The channel having higher priority is listed above others.
- The listing can also be done by only one priority selection.
- The user can make more than one region and/or language priority selection.
- The user can make more than one content selections out of listed preference options.
- It is also possible to create channel program list without aid of region and/or language based pre-established priority list (created in the site of manufacturer). The channels can be classified only with respect to given initial priorities and; having same priority in listing are classified due to their frequency location in frequency spectrum.
- Broadcast channels having the same initial priorities gains an additional priority such that, the said broadcast channel gains higher priority compared to others due to its frequency location, where the broadcasting signals with lower frequency gains an additional priority compared to the broadcasting signals with higher frequencies. This situation is valid if the establishment of initial priority based channel/program list is done only by means of the initial priority definitions, and without existence of said region and/or language based pre-established order.
- There is a table for stable-contented broadcast channels, which is used for identification of broadcast channels in accordance to received channel signal. That table is stored in the second memory in the site of manufacturer.
- In power on/off situations where contents of the first memory are deleted, initially channel list from the second memory will be displayed to reduce channel search time (described in step 16).
- The user may re-determine and allocate channels on the second memory, if necessary.
- There is a warning or highlight for instant channel content changes for channels hold in the second memory in such a way that;
   i. the tuned channel content is instantly evaluated,
   ii. the channel content is compared with user-defined preference, for a mismatch at that point, a highlight or warning action may be taken.

The present invention for constituting a preferable broadcast channel allocation is also explained by means of the following example.

Before performing an auto-search to list available broadcast channels in a receiver where that particular invention is used; the user is asked to select region , language and define his/her preferences, where those region & language and preference selection lists are created in the site of manufacturer.

As soon as user is encountered by region and language selections such like Turkey, England, Italy and their languages etc., and asked to choose one of those region and language options whereas he/she is also asked to define content preferences such like music, film, sports where user can detail the content preference selection from available preference lists.

By means of evaluating above listed operation; an optimum preference and channel list selection is established.

For instance; a user in England who wishes to view English sport channels broadcasting football matches at top of broadcast channels list, enters the system "English" as language priority and choose "sports" as content preference; the content preference selection can be done in detailed manners; such like selecting "football games" under "sports" preference selections if possible; those content preference selections are created in the site of manufacturer. The invention initially does an auto-search to list available broadcast channels in English and transforms all available channels to the first memory of the receiver to establish a table. In that particular established table in the first memory, English channels are listed above the others and have priority compared to other broadcast stations.

And then comes the preference based listing; the established table in the first memory is evaluated due to user preferences, stored to the second memory and the preference program allocation is completed. Within those processes, the codes present in channel signals are used to identify channel content, language, rating etc. During the preference based listing operation ,for stable-contented channels such like news, sport; the invention uses pre-memorized channel content information for those channels which are also created in the site of manufacturer So whenever user makes a preference selection, on the course of establishing preference based channel list, besides evaluating channel contents from codes of signals, the pre-memorized channel content information stored in the second memory including channel content information for stable-contented channels is used. Those pre-memorized channel content information can be re-determined by user.

An example below is illustrated for selecting priorities and creating preferable program list.

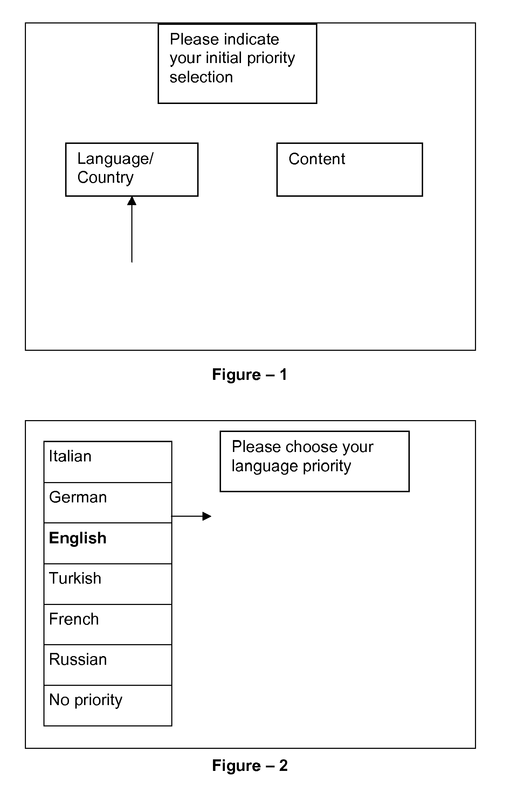

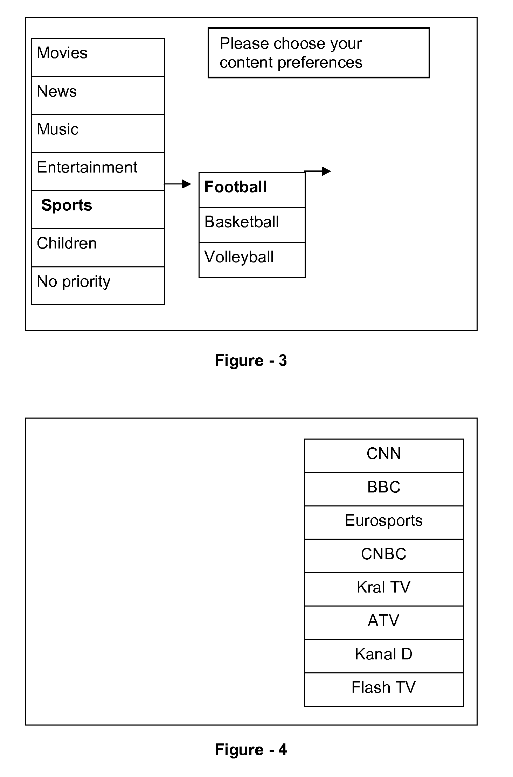

As the user initially starts the invention included receiver, the user encounters a language or priority selection menu out of listed language selection options, like sketched in figure
1. As it is seen in figure 1, user is given the opportunity to make language or content preference selections.
2. After making a language selection (initial priority is selected to be language for this case), a language preference option is provided to user, as seen in figure 2.
3. The next step will be defining content preferences out of listed preference selection options. The user defines content preferences by means of performing selections; or is capable of skipping the content preference selection. An example for content preference definition on TV screen is sketched in figure 3. As it is seen in figure 3, every selection contains sub-selections; for example the user can define his/her preferences in detailed manners by means of making detailed preference selections. In that introduced example, the "sports" preference selection contains "football", "basketball", "volleyball" sub-selections; those preference selection options are created in the site of manufacturer.

For that example, the user chose English as language priority, and defined content preference priority by means of making content preference selections out of available options.

After frequency search for broadcast signals, for instance eight channels are detected (normally thousands of channels will be detected).Those channels will be listed in the first memory with respect to a region and/or language based pre-established order, as it is seen in Figure-4. The pre-established list, used in region and language priority selections, is created in the site of manufacturer. And as soon as user makes a region and language selection, the found channels (stored in the first memory) are compared with that region and/or language based pre-established priority list and channels are listed in accordance to that pre-established priority list.

In the next step, those channels will be listed due to language and content preference priorities. As it is clear in Figure-5; the English sport channels will have higher priority compared to others. (The other channels are Turkish channels).CNN and CNBC broadcast in English language; but do not broadcast sports content at that instant ;Kral TV, ATV ,Kanal D and Flash TV are Turkish channels and none of them broadcast sports content at that instant. BBC and Eurosports which broadcast a football game at that instant will have priority compared to other channels (Eurosport is listed above BBC;as it is found before BBC in frequency spectrum), and CNN and CNBC will have priority compared to channels which do not broadcast in English. Kanal D and Flash TV are channels; whose signals do not contain an identification code, and does not appear to be in channel content list. (Channel content list is used for identification of channels and created in the site of manufacturer). As both Kanal D and Flash TV are not identified, they are listed according to their frequency location in frequency spectrum (Kanal D appears to be found before Flash TV)

By means of other features of the invention, the user is capable of choosing more than one preference options, the user may define second priority, based on preferences, by initially giving "sports" and "football" priority, and then making language selection, the channels which broadcast football games at that instant would have higher priority, compared to other channels, and English channels will have higher priority compared to other channels.

After establishing a region and content preference based channel listing, the content of the channels may change (for instance, while creating a list of channels in which English and sports channels are given priority, the channel contents are evaluated and processed instantly). For example; after a region selection for England and content preference selection for sports, BBC may be given priority to the top of channel list (at that time a football game was broadcasted), but after an hour, although the game finishes, BBC continues to exist at the top of preference based channel list.

In order to fix this situation, the user is given the opportunity to reset preference based channel listing process. As the user sends a request for channel list refreshment, broadcast channels in established table in the second memory are reevaluated (also based on codes present in channel signals, if possible) due to region and/or language based priority list which was created in the site of manufacturer and then the established table in the first memory is evaluated due to user preferences and stored to the second memory (i.e. as the game in BBC ended and let say a game in CNBC started, the preference priority of BBC will be lost, but language priority will remain).The user can re-determine and can re-allocate channels after establishment of language and content preference based channel list.

With the help of the region and/or language based pre-established priority list, created by the manufacturer, the listing due to user preferences will be more convenient.

The present invention can be used in mass production for television or radio receivers, where the final user is given the chance to create an optimum preferable program list depending on region, language and content preference selections in any region in the world; where broadcast signal can be received by the invention-included receiver.

## Claims

1. A method of establishment of preferable broadcast channel allocation list in a television or radio signal receiver, comprising the following steps wherein;
• defining a priority for making region and/or language selections,
• defining another priority by selecting content preferences,
• searching the frequency range for broadcast channels,
• detecting broadcast signals during frequency search for broadcast channels,
• storing the tuning information and/or the broadcasting station information of the found broadcast channel in a memory,
• classifying and/or listing the stored channels in a memory due to priority selections in order to establish priority based channel/program list.

2. A method according to claim 1 wherein; said tuning information and/or the broadcasting station information of the found broadcast channel is stored in a first memory to a list under the next memory space.

3. A method according to claim 2 wherein; said tuning information and/or the broadcasting station information of the found broadcast channel is stored in said first memory in accordance to a region and/or language based pre-established order.

4. A method according to claim 3 wherein; said region and/or language based pre-established order is created in the site of manufacturer.

5. A method according to claim 1 wherein; said storing is listing the tuning information and/or the broadcasting station information of the found broadcast channel under the next memory space corresponding to an order in the first memory.

6. A method according to claim 5 wherein; said order is created in the site of manufacturer.

7. A method according to claim 2 wherein; said first memory is a volatile memory.

8. A method according to claim 2 wherein; said first memory is memory space in the first memory.

9. A method according to claim 3 wherein; the classifying and/or listing due to priority selections is evaluating the tuning information and/or broadcast channel information within the received broadcast signals and storing the broadcast channels in an order in accordance to the priority selections.

10. A method according to claim 9 wherein, the priority based channel/program list is stored in a second memory.

11. A method according to claim 3 wherein, said broadcast channels having same initial priorities, gains an additional priority; if the establishment of initial priority based channel/program list is done only by means of the initial priority definitions and without existence of said region and/or language based pre-established order.

12. A method according to claim 11 wherein; a said broadcast channel gains said additional priority compared to others depending on the frequency location of said broadcast channel.

13. A method according to claim 12 wherein; said broadcast channel gains higher priority compared to others due to its frequency location where the broadcasting signals with lower frequency gains said additional priority compared to the broadcasting signals with higher frequencies, if they have the same priorities.

14. A method according to claim 9 wherein; said broadcast channels which do not contain identification code in their channel signals (unidentified channels) and do not have the initial priorities are listed to the initial priority based list in accordance to another additional priority.

15. A method according to claim 14 wherein; a said unidentified channel gains the another additional priority compared to other unidentified channels due to its frequency location where the first broadcast channel closest to beginning of frequency search spectrum gains the another additional priority compared to other broadcast channels.

16. A method according to 10 wherein; the priority based channel/program list stored in the second memory can be re-determined.

17. A method according to claim 1 wherein, if no region and/or language have been selected by the user during defining a priority, the default region and/or language which is pre-selected by the manufacturer is selected.

18. A method according to claim 1 wherein, if no content preference has been selected by the user during defining said another priority; the default content preference pre-defined by the manufacturer is selected.

19. A method according to claim 1 wherein, if no region and/or language have been selected by the user during defining a priority, said priority based channel/program list is done with respect to said content preference selections.

20. A method according to claim 1 wherein, if no content preference has been selected by the user, during defining another priority, said priority based channel/program listing is done with respect to said region and/or language selections.

21. A method according to claim 1 wherein, more than one region and/or language priority selections can be done.

22. A method according to claim 1 wherein, more than one content preference selections out of listed content preference options can be done.

23. A method according to claim 9 wherein; for the classifying and/or listing of broadcast channels in the first memory due to the priority selections in order to create said priority based channel/program list; a pre-memorized channel content information list is used where the broadcast channel contents are pre-memorized in that said list, and used in establishment of the priority based channel/program list.

24. A method according to claim 23 wherein; said pre-memorized channel content information list is for broadcast channels which are stable-contented.

25. A method according to claim 23 wherein; the pre-memorized channel content information for the broadcast channels is stored in said pre-memorized channel content information list in advance.

26. A method according to claim 23 wherein; said pre-memorized channel content information for the broadcast channels are stored in advance in the site of manufacturer.

27. A method according to claim 23 wherein; said pre-memorized channel content information for broadcast channels can be re-determined by user.

28. A method according to claim 1 wherein, if searching the frequency range for broadcast channels is cancelled, the program numbers of the said broadcast channels in the priority based channel/program list will be in the order which has been found in the channel frequency search.

29. A method according to claim 1 wherein, said tuning information and/or the broadcasting station information of the found broadcast channels are stored in the memory under a next memory space corresponding to program number without leaving any blank space in the established list.

30. A method according to claim 29 wherein, if the broadcast channel has an identification code, it has a priority.

31. A method according to claim 29 wherein, if the broadcast channel is in "C" band it has another priority against a broadcast channel in "S" band.

32. A method according to claim 9 wherein, in case the content of viewed broadcast channel change, the priority based channel/program list in the second memory is refreshed in accordance to the priority selections

33. A method according to claim 32 wherein, the refreshment is re-setting the priority based channel/program list in the second memory to refresh the priority based channel/program list.

34. A method according to 33 wherein, re-setting method comprises the steps;
the list hold in the second memory is stored to the first memory;
during storing process the priority based channel/program list is refreshed due to the first priority list and is stored to the first memory.
the priority based channel/program list in the first memory is stored to the second memory depending on the priority selections.

35. A method according to claim 34 wherein, said re-setting method is re-listing the broadcasting channels due to the priority selections.

36. A method according to claim 10 wherein, in power on/off situations where information in the first memory are deleted, initially; channel list in the second memory is used.

37. A method according to claim 1 wherein, in power on/off situations where information in the first memory are deleted, initially; priority means in the second memory are used.

38. A method according to claim 1 wherein, channel content is instantly evaluated whenever a broadcast channel out of the priority based channel/program list established in the second memory, the content of said broadcast channel is evaluated and compared with the priority selections for possible mismatches.

39. A method according to claim 38 wherein, in case of a said mismatch between the channel content and the user defined priorities a visual and/or audio warning for selected broadcasting channel is displayed.

40. A method according to claim 10 wherein, said second memory is a non-volatile memory.
